# EUROPÄISCHE PATENTSCHRIFT

(11) **EP 3 371 250 B1**
(45) Veröffentlichungstag und Bekanntmachung des Hinweises auf die Patenterteilung: **06.05.2020**
(21) Anmeldenummer: 16794973.4
(22) Anmeldetag: 04.11.2016
(51) Int. Cl.: C08J 9/33, C08J 9/00

(54) **FUNKTIONSWERKSTOFF MIT ZUMINDEST EINEM ADDITIV**
FUNCTIONAL MATERIAL CONTAINING AT LEAST ONE ADDITIVE
MATÉRIAU FONCTIONNEL CONTENANT AU MOINS UN ADDITIF

(30) Priorität: 05.11.2015 DE 102015118958
(43) Veröffentlichungstag der Anmeldung: 12.09.2018
(73) Patentinhaber: puren GmbH, 88662 Überlingen (DE)
(72) Erfinder: BOMMER, Hans, Überlingen 88662 (DE)
(74) Vertreter: Daub, Thomas
(86) Internationale Anmeldenummer: PCT/EP2016/076720
(87) Internationale Veröffentlichungsnummer: WO 2017/077069

(56) Entgegenhaltungen:
- EP-A1- 1 375 104
- WO-A1-2012/091557

## Beschreibung

### Stand der Technik

Die Erfindung betrifft ein Verfahren zur Herstellung eines Funktionswerkstoffs und nach dem Verfahren erhältliche Wärmedämmelemente.

Unter der Bezeichnung "purenit" ist bereits ein Funktionswerkstoff bekannt, dessen Bestandteile aus einem zerkleinerten duroplastischen Material auf Basis von Hartschaum und einem Bindematerial zum Binden des duroplastischen Materials bestehen.

Die Druckschrift WO 2012/091557 A1 offenbart eine Methode, in welcher Fragmente aus PUR- oder PIR-Hartschaum mit einem partikelförmigen Bindemittel vermischt werden, um einen Funktionswerkstoff herzustellen.

Die Druckschrift EP 1375104 A1 offenbart eine Methode, in welcher PUR-Hartschaum pulverisiert wird und mit einem flüssigen Bindemittel vermischt wird, um einen Funktionswerkstoff herzustellen, welcher eine Dichte zwischen 40 kg/m³ und 200 kg/m³ aufweist.

Die Aufgabe der Erfindung besteht insbesondere darin, Elemente bereitstellen zu können, die vielseitig eingesetzt werden können. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird ein Verfahren zur Herstellung eines Funktionswerkstoffs vorgeschlagen, der eine Wärmeleitfähigkeit gemäß EN 12667 von höchstens 0,10 W/(m·K), eine Rohdichte größer als 450 kg/m³, eine Druckspannung nach DIN EN 826 größer als 6 MPa, eine Biegefestigkeit gemäß DIN EN 12089 größer als 4 MPa, eine Scherfestigkeit gemäß DIN EN 12090 größer als 1 MPa und eine Schubfestigkeit gemäß DIN EN 12090 größer als 1 MPa aufweist, aus einem duroplastischen Material auf der Basis PUR-Hartschaum und/oder PIR-Hartschaum, das zerkleinert mit zumindest einem Bindematerial vermischt wird, wobei das Bindematerial in nicht-ausgehärtetem Zustand eine flüssige Konsistenz aufweist, wobei, bevor das duroplastische Material und das Bindematerial mit Temperatur und/oder Druck beaufschlagt werden, zumindest ein Additiv zugegeben wird, das ein Brandverhalten verbessert, wobei das Brandverhalten zumindest einer Brandreaktionsklasse C gemäß DIN EN 13501-1 entspricht. Dadurch kann ein Funktionswerkstoff bereitgestellt werden, aus dem Elemente hergestellt werden können, welche als "schwer entflammbar" gelten. Unter "zerkleinert" soll in diesem Zusammenhang insbesondere verstanden werden, dass das duroplastische Material eine maximale Teilchengröße von 5 mm aufweist. Vorzugsweise ist die maximale Teilchengröße kleiner als 1 mm.

Mithin weist der Funktionswerkstoff als ersten Bestandteil ein duroplastisches Material und als zweiten Bestandteil ein Bindematerial zum Binden des duroplastischen Materials auf.

Erfindungsgemäß weist der Funktionswerkstoff zumindest ein Additiv auf, das als dritter Bestandteil dazu vorgesehen ist, ein Brandverhalten zu verbessern. Dadurch kann erreicht werden, dass der Funktionswerkstoff erhöhte Vorgaben insbesondere im vorbeugenden Brandschutz erfüllt, wodurch aus dem Funktionswerkstoff hergestellte Elemente vielfältiger eingesetzt werden können. Unter einem "Additiv" soll dabei insbesondere ein Material verstanden werden, welches dem duroplastischen Material, dem Bindematerial oder einer Mischung aus dem duroplastischen Material und dem Bindematerial beigefügt wurde. Insbesondere soll darunter kein Auftrag auf eine Oberfläche eines aus dem Funktionswerkstoff hergestellten Elements verstanden werden.

Unter einem "duroplastischen Material" soll insbesondere ein Material verstanden werden, das aus einem Kunststoff oder einer Mischung von Kunststoffen besteht, welche nach ihrer Aushärtung nicht weiter verformt werden können. Unter einem "Bestandteil" soll insbesondere eine Komponente für eine Herstellung des Funktionswerkstoffs verstanden werden. Vorzugsweise bildet das duroplastische Material einen überwiegenden Bestandteil aus, d.h. er ist größer als die übrigen Bestandteile zusammen. Unter einer "Verbesserung des Brandverhaltens" soll insbesondere verstanden werden, dass das Additiv ein Verhalten des Funktionswerkstoffs bei einer Beaufschlagung mit einer Flamme und/oder Hitzeeinwirkung verbessert, ohne andere Eigenschaften des Funktionswerkstoffs wesentlich zu verschlechtern. Andere Eigenschaften sind insbesondere mechanische Eigenschaften, wie beispielsweise eine Druckfestigkeit, Biegefestigkeit, Schraubenauszugswerte, und/oder anwendungsrelevante Eigenschaften, wie insbesondere eine Wärmeleitzahl oder ein Diffusionsverhalten. Unter "wesentlich verschlechtern" soll insbesondere verstanden werden, dass die Werte der anderen Eigenschaften um höchstens 20 %, vorteilhafterweise um höchstens 10 %, in Richtung eines schlechteren Werts verändert werden. In diesem Zusammenhang soll unter einem "Additiv" insbesondere ein Material verstanden werden, das zumindest im Wesentlichen lediglich das Brandverhalten beeinflusst. Unter "vorgesehen" soll insbesondere speziell ausgelegt und/oder ausgestattet verstanden werden.

Vorzugsweise weist das duroplastische Material zerkleinerten PUR- und/oder PIR-Hartschaum und zerkleinerten Phenolhartschaum auf, die durch das Bindematerial gebunden sind. Dadurch kann ein Funktionswerkstoff bereitgestellt werden, der ein gutes Brandverhalten aufweist. Unter "zerkleinertem PUR- und/oder PIR-Hartschaum" soll dabei insbesondere mechanisch zerkleinerter Hartschaum auf Basis von Polyurethan (PUR), insbesondere nach DIN EN 13165, oder Polyisocyanurat (PIR) verstanden werden. Unter "zerkleinertem Phenolhartschaum" soll dabei insbesondere mechanisch zerkleinerter Phenolhartschaum oder ein auf Phenolhartschaum basierendes, zerkleinertes Material verstanden werden. Das duroplastische Material kann grundsätzlich eine Mischung aus PUR, PIR, Phenolhartschaum oder weiteren duroplastischen Materialen, insbesondere Hartschäumen aus duroplastischen Materialien, sein. Insbesondere ist der Funktionswerkstoff recycelbar. Indem Elemente aus dem Funktionswerkstoff mechanisch zerkleinert werden, können sie als duroplastisches Material zur Herstellung des Funktionswerkstoffs verwendet werden. Unter "mechanisch zerkleinert" soll insbesondere verstanden werden, dass für das duroplastische Material ausgehärteter Hartschaum, wie beispielsweise Produktionsreste, Bearbeitungsreste oder Altelemente, verwendet wird, der in einem mechanischen Verfahren, wie beispielsweise durch Mahlen, Schreddern oder Häckseln, zerkleinert wird.

Weiter wird vorgeschlagen, dass der Funktionswerkstoff ein Fasermaterial aufweist, das mit dem duroplastischen Material und/oder dem Bindematerial und/oder dem Additiv vermischt ist. Durch Beigabe eines Fasermaterials kann das Brandverhalten weiter verbessert werden. Unter einem "Fasermaterial" soll dabei insbesondere ein Material aus mineralischen Fasern oder nichtmineralischen Fasern wie beispielsweise Glasfasern, Kohlenstofffasern, Keramikfasern oder Basaltfasern verstanden werden.

Es wird vorgeschlagen, dass der Funktionswerkstoff ein Brandverhalten entsprechend zumindest einer Brandreaktionsklasse C gemäß DIN EN 13501-1 und entsprechend zumindest einer Baustoffklasse B1 gemäß DIN 4102-1 aufweist. Dadurch gilt der Funktionswerkstoff als "schwer entflammbar", womit auch die aus dem Funktionswerkstoff hergestellten Elemente als "schwer entflammbar" gelten. Indem das Brandverhalten des Funktionswerkstoffs diesen Klassen entspricht, kann der Funktionswerkstoff, dessen Brandverhalten ohne das Additiv lediglich einer Brandreaktionsklasse E und einer Baustoffklasse B2 entspricht, also als "normal entflammbar" gilt, auch für Anwendungen eingesetzt werden, bei denen "schwer entflammbar" gefordert ist. Die aus dem Funktionswerkstoff hergestellten Elemente sind somit besonders vielfältig einsetzbar. Unter "zumindest" soll in diesem Zusammenhang insbesondere verstanden werden, dass das Brandverhalten gleich oder besser im Sinne eines Brandschutzes ist.

Weiter wird vorgeschlagen, dass das Additiv mit dem duroplastischen Material und/oder dem Bindematerial vermischt ist, insbesondere bevor der Funktionswerkstoff vollends gefertigt ist. Dadurch kann das Brandverhalten besonders vorteilhaft beeinflusst werden. Insbesondere kann das als "schwer entflammbar" geltende Brandverhalten für den Funktionswerkstoff insgesamt, d.h. auch für einen Kern eines aus dem Funktionswerkstoffs hergestellten Elements, erreicht werden, und ist nicht lediglich durch Oberflächeneigenschaften der Elemente bedingt. Unter "vermischt" soll dabei insbesondere verstanden werden, dass das Additiv in den Funktionswerkstoff eingebracht ist und vorzugsweise homogen oder zumindest im Wesentlichen homogen mit dem duroplastischen Material und/oder dem Bindematerial vermischt ist.

Vorzugsweise weist das Additiv einen Massenanteil von zumindest 3 % auf. Dadurch kann das Brandverhalten besonders positiv beeinflusst werden. Unter einem "Massenanteil" soll dabei insbesondere ein Anteil an einer Gesamtmasse des Funktionswerkstoffs verstanden werden, welche sich insbesondere aus einem Massenanteil der unterschiedlichen Bestandteile ergibt. Unter einem in Prozent angegebenen Massenanteil soll dabei insbesondere ein Anteil in Gewichtsprozent verstanden werden.

Es wird vorgeschlagen, dass das Additiv bei Temperaturbeaufschlagung ein Blähverhalten aufweist. Dadurch kann das Brandverhalten beeinflusst werden, ohne dass eine chemische und/oder physikalische Wechselwirkung in dem Funktionswerkstoff stattfindet. Dadurch können die Eigenschaften, die der Funktionswerkstoff bei einer Herstellung ohne das Additiv aufweist, nahezu unverändert erhalten werden und es kann ein vielseitig einsetzbarer Funktionswerkstoff mit einem guten Brandverhalten bereitgestellt werden.

Bevorzugt weist das Additiv eine Expansionsrate von zumindest 30 cm³/g auf. Dadurch kann das Brandverhalten besonders gut verbessert werden. Unter einer "Expansionsrate" soll dabei insbesondere ein Volumen verstanden werden, um das sich das Additiv ausdehnt, wenn auf eine Temperatur oberhalb einer Aktivierungstemperatur erwärmt wird, normiert auf eine Masse. Vorzugsweise beträgt die Expansionsrate zumindest 100 cm³/g. Als expandierendes Additiv sind grundsätzlich unterschiedliche Materialien denkbar, deren Volumen sich vergrößert, wenn ihre Temperatur die Aktivierungstemperatur überschreitet. Vorzugsweise ist die Aktivierungstemperatur dabei kleiner als eine Temperatur, die während der Herstellung des Funktionswerkstoffs auftritt.

Weiter wird vorgeschlagen, dass das Additiv eine Aktivierungstemperatur von zumindest 90 Grad Celsius aufweist. Dadurch kann das Additiv bereits während der Herstellung dem Funktionswerkstoff beigemengt werden, ohne dass ein Herstellprozess umgestellt werden muss, wenn in diesem Temperaturen lediglich unterhalb der Aktivierungstemperatur auftreten. Vorzugsweise beträgt die Aktivierungstemperatur zumindest 140 Grad Celsius. Insbesondere wird das Additiv so gewählt, dass seine Aktivierungstemperatur größer ist als die Temperatur, die während der Herstellung des Funktionswerkstoffs auftritt.

Bevorzugt weist das Additiv einen Kohlenstoffgehalt auf. Dadurch wird neben der Verbesserung des Brandverhaltens bei Flammeneinwirkung eine Carbonisierung begünstigt und eine Sauerstoffzufuhr gebremst. Gleichzeitig kann erreicht werden, dass die Eigenschaften des Funktionswerkstoffs nicht nachteilig verändert werden. Der Kohlenstoffgehalt beträgt vorzugsweise zumindest 50 %, bevorzugt zumindest 70 % und besonders bevorzugt zumindest 80 %, kann aber auch höher sein.

Bevorzugt ist das Additiv halogenfrei, wobei vorzugsweise zumindest 60 % des Additivs eine Teilchengröße von zumindest 100 µm aufweisen. Dadurch kann das Additiv besonders gut in das duroplastische Material eingemischt werden, bevor das Bindematerial zugesetzt wird. Auch kann eine gute Einmischbarkeit in das Bindematerial erreicht werden.

In einer besonders vorteilhaften Ausgestaltung ist das Additiv auf Basis eines Graphits, insbesondere eines Blähgraphits, aufgebaut. Dadurch kann ein besonders vorteilhafter Funktionswerkstoff geschaffen werden.

Bevorzugt wird das Additiv vor und/oder nach und/oder zugleich mit einer Einbringung des Bindematerials zugegeben. Insbesondere kann das Additiv mit dem zerkleinerten duroplastischen Material vermengt werden, bevor das Bindematerial zugegeben wird. Es ist aber auch denkbar, dass das Additiv mit dem Bindematerial vermengt wird und damit zugleich mit dem Bindematerial dem duroplastischen Material zugegeben wird. Ebenfalls denkbar ist, dass zunächst das duroplastische Material und das Bindematerial miteinander vermengt werden und dann erst das Additiv zugegeben wird. Auch denkbar ist, dass das Additiv in mehreren Schritten zugegeben wird.

Außerdem wird vorgeschlagen, dass das duroplastische Material zerkleinerten Funktionswerkstoff aufweist, wodurch sich für den Funktionswerkstoff eine Recycling-Möglichkeit ergibt, welche eine besonders gute Wiederverwertung ermöglicht. Außerdem wird ein Element, insbesondere ein Wärmedämmelement beispielsweise für ein Wärmedämmverbundsystem, eine Fassadendämmung oder eine Dachdämmung, vorgeschlagen, erhältlich nach einem erfindungsgemäßen Verfahren. Unter einem "Element" soll dabei insbesondere ein Konstruktions- und/oder Bauelement verstanden werden, das dazu vorgesehen ist, verkauft zu werden, wie beispielsweis eine Platte.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

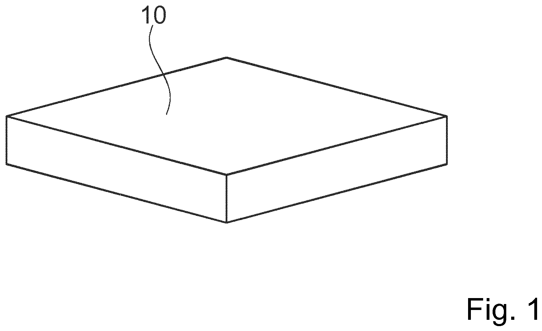

Die einzige Figur 1 zeigt schematisch ein Element 10, insbesondere mit wärmedämmenden Eigenschaften, aus einem Funktionswerkstoff. Der Funktionswerkstoff ist auf Basis von duroplastischen Materialen, insbesondere PUR oder PIR, hergestellt. Das Element 10 besteht zumindest im Wesentlichen aus dem Funktionswerkstoff.

Beispielsweise kann das Element 10 einen Kern aufweisen, der aus dem Funktionswerkstoff besteht und der einseitig oder beidseitig beschichtet ist. Es ist aber auch denkbar, dass das Element 10 vollständig aus dem Funktionswerkstoff besteht.

Der Funktionswerkstoff weist als ersten Bestandteil das duroplastische Material auf. Das duroplastische Material ist insbesondere zerkleinerter Hartschaum. Als zweiten Bestandteil weist der Funktionswerkstoff ein Bindematerial zum Binden des duroplastischen Materials auf. Für eine Herstellung des Elements 10 wird Material, das zumindest teilweise aus dem duroplastischen Material besteht, wie beispielsweise PUR-/PIR-Hartschaum aus Produktionsresten, aus Sanierungen, aus Fahrzeug- und anderen Aufbauten, aus Weiterbearbeitungen, aber auch der Funktionswerkstoff selbst, mechanisch zerkleinert, mit dem Bindematerial vermischt und in Form gebracht. Die aus dem Funktionswerkstoff hergestellten Elemente können je nach Form und/oder Größe, die für das Element 10 vorgesehen sind, weiterbearbeitet werden, nachdem der Funktionswerkstoff durchgehärtet und ausgekühlt ist. Der Funktionswerkstoff kann in ausgehärtetem Zustand beispielsweise geschnitten oder gefräst werden.

Das zerkleinerte duroplastische Material wird mit dem Bindematerial vermischt. Das Bindematerial weist in nicht-ausgehärtetem Zustand eine flüssige Konsistenz auf. Das Bindematerial bindet das duroplastische Material. Der Funktionswerkstoff ist in ausgehärtetem Zustand formstabil. Massenanteile des duroplastischen Materials des Bindematerials hängen insbesondere von einer Struktur der Mischung und der Art und Mischung des Bindematerials ab. Das duroplastische Material und das Bindematerial weisen typischerweise ein Gewichtsverhältnis von zumindest 5:1 zueinander auf, d.h. bezogen auf ihre Massenanteile enthält der Funktionswerkstoff zumindest fünfmal mehr duroplastisches Material als Bindematerial.

Der Funktionswerkstoff weist eine Wärmeleitfähigkeit gemäß EN 12667 von höchstens 0,10 W/(m·K), vorzugsweise größer als 0,07 W/(m·K) auf. Weiter weist der Funktionswerkstoff eine Rohdichte größer als 450 kg/m³ und eine Druckspannung nach DIN EN 826 größer als 6 MPa auf. Der Funktionswerkstoff ist vorzugsweise fäulnisfest und unverrottbar. Zudem ist der Funktionswerkstoff vorzugsweise beständig gegen Mineralöle, Lösemittel sowie verdünnte Laugen und Säuren. Weiter weist der Funktionswerkstoff eine Biegefestigkeit gemäß DIN EN 12089 größer als 4 MPa, eine Scherfestigkeit gemäß DIN EN 12090 größer als 1 MPa und eine Schubfestigkeit gemäß DIN EN 12090 größer als 1 MPa auf. Zudem weist der Funktionswerkstoff vorzugsweise eine Schraubenauszugsfestigkeit gemäß DIN EN 14358 von zumindest 7,5 N/mm² für einen Oberflächenauszug einer Holzschraube 6 x 60 auf.

Eine Grundzusammensetzung des Funktionswerkstoffs, die lediglich aus dem duroplastischen Material als ersten Bestandteil und dem Bindematerial als zweiten Bestandteil besteht, weist ein Brandverhalten auf, das einer Brandreaktionsklasse E gemäß DIN EN 13501-1 und einer Baustoffklasse B2 gemäß DIN 4102-1 entspricht. Zur Verbesserung des Brandverhaltens ist der Grundzusammensetzung, bestehend aus dem duroplastischen Material und dem Bindematerial, als dritter Bestandteil ein Additiv zugegeben. Das Additiv, das der Funktionswerkstoff aufweist, ist dazu vorgesehen, das Brandverhalten zu verbessern. Durch das Additiv weist der Funktionswerkstoff ein Brandverhalten auf, das zumindest einer Brandreaktionsklasse C gemäß DIN EN 13501-1 und zumindest einer Baustoffklasse B1 gemäß DIN 4102-1 entspricht.

Das Additiv ist mit dem duroplastischen Material und dem Bindematerial vermischt. In einem Verfahren zur Herstellung des Funktionswerkstoffs wird das Additiv dem duroplastischen Material und dem Bindematerial zugegeben, bevor das Bindematerial ausgehärtet ist. Das Additiv ist vorzugsweise als ein Feststoff ausgebildet, der in Form eines Pulvers oder Granulats dem duroplastischen Material und/oder dem Bindematerial beigegeben werden kann. Das zerkleinerte duroplastische Material weist eine Konsistenz auf, die der des Additivs zumindest ähnelt. Das zerkleinerte duroplastische Material weist eine maximale Teilchengröße auf, die höchstens 5 Millimeter beträgt, vorzugsweise aber kleiner ist. Aufgrund der Teilchengröße lässt sich das Additiv problemlos mit dem zerkleinerten duroplastischen Material vermischen.

In einer Herstellung des Funktionswerkstoffs wird das duroplastische Material zerkleinert, beispielsweise indem es gemahlen wird. Das zerkleinerte duroplastische Material, das vorzugsweise als Mehl vorliegt, wird mit dem Additiv vermengt. Das duroplastische Material und das Additiv bilden insbesondere ein homogenes Gemisch aus. Nachdem das duroplastische Material mit dem Additiv vermengt wurde, wird das Bindematerial zugegeben. Zusätzlich kann dem Gemisch als vierter Bestandteil noch ein Fasermaterial zugegeben werden, das mit dem duroplastischen Material, dem Bindematerial und/oder dem Additiv vermischt wird. Um das Gemisch aus dem zerkleinerten duroplastischen Material, dem Bindematerial und dem Additiv zu verfestigen, wird das Gemisch in einer Form mit Druck und Temperatur beaufschlagt. Das flüssige Bindematerial bindet das duroplastische Material und das Additiv und härtet aus, wenn das Gemisch abkühlt.

Das Additiv weist einen Massenanteil von zumindest 3 % auf. Insbesondere weist das Additiv einen Massenanteil zwischen 5 % und 20 % auf, wobei der Massenanteil besonders 10 % ± 3 % beträgt. Das duroplastische Material und das Bindematerial weisen damit gemeinsam einen Massenanteil von typischerweise 80 % ± 3 % auf. Das Bindematerial weist typischerweise einen Massenanteil von höchstens 20 % auf. Das duroplastische Material weist damit typischerweise einen Massenanteil zwischen 60 % und 75 % auf. Das duroplastische Material weist eine Rohdichte auf, welche um ein Vielfaches geringer ist als eine Rohdichte des Bindematerials.

Das Additiv weist bei Temperaturbeaufschlagung ein Blähverhalten auf, durch das sich eine Rohdichte des Additivs ändert, wenn eine Temperatur des Funktionswerkstoffs eine Aktivierungstemperatur des Additivs überschreitet. Im Grundzustand weist das Additiv eine Rohdichte auf, welche insbesondere kleiner als 5 g/cm³ ist. Typischerweise liegt die Rohdichte zwischen 1 g/cm³ und 3 g/cm³. Das Additiv weist eine Expansionsrate von zumindest 30 cm³/g auf. Vorzugsweise ist die Expansionsrate größer als 100 cm³/g und kann typischerweise in einem Bereich zwischen 250 cm³/g und 400 cm³/g liegen. Das Blähverhalten bewirkt damit eine Volumenvergrößerung des Additivs um einen Faktor von zumindest 10, wenn der Funktionswerkstoff auf eine Temperatur erwärmt wird, die größer ist als die Aktivierungstemperatur des Additivs. Grundsätzlich ist es aber auch denkbar, dass das Additiv eine andere Expansionsrate aufweist.

Das Additiv weist eine Aktivierungstemperatur von zumindest 90 Grad Celsius auf. Vorzugsweise liegt die Aktivierungstemperatur bei über 120 Grad Celsius. Wird der Funktionswerkstoff mit dem Additiv auf die Aktivierungstemperatur des Additivs erwärmt, dehnt sich das Additiv aus. Der Volumenanteil des Additivs verändert sich, wenn eine Temperatur des Funktionswerkstoffs größer wird als die Aktivierungstemperatur des Additivs.

Das Additiv weist einen Kohlenstoffgehalt auf, der vorzugsweise zumindest 85 % beträgt, grundsätzlich aber auch niedriger sein kann. Das Additiv ist auf Basis von einem Graphit aufgebaut. Das Additiv ist als ein Blähgraphit ausgebildet. Das Additiv weist Moleküle einer Säure auf, die zwischen Schichten des Graphits eingelagert sind. Wird das Additiv über die Aktivierungstemperatur erwärmt, dehnen sich die Schichten aus und das Volumen vergrößert sich.

## Patentansprüche

1. Verfahren zur Herstellung eines Funktionswerkstoffs, der eine Wärmeleitfähigkeit gemäß EN 12667 von höchstens 0,10 W/(m·K), eine Rohdichte größer als 450 kg/m³, eine Druckspannung nach DIN EN 826 größer als 6 MPa, eine Biegefestigkeit gemäß DIN EN 12089 größer als 4 MPa, eine Scherfestigkeit gemäß DIN EN 12090 größer als 1 MPa und eine Schubfestigkeit gemäß DIN EN 12090 größer als 1 MPa aufweist, aus einem duroplastischen Material auf der Basis PUR-Hartschaum und/oder PIR-Hartschaum, das zerkleinert mit zumindest einem Bindematerial vermischt wird, wobei das Bindematerial in nicht-ausgehärtetem Zustand eine flüssige Konsistenz aufweist, wobei, bevor das duroplastische Material und das Bindematerial mit Temperatur und/oder Druck beaufschlagt werden, zumindest ein Additiv zugegeben wird, das ein Brandverhalten verbessert, wobei das Brandverhalten zumindest einer Brandreaktionsklasse C gemäß DIN EN 13501-1 entspricht.

2. Verfahren nach Anspruch 1,
**dadurch gekennzeichnet, dass**
das duroplastische Material zerkleinerten PUR- und/oder PIR-Hartschaum und zerkleinerten Phenolhartschaum aufweist, die durch das Bindematerial gebunden werden.

3. Verfahren nach Anspruch 1 oder 2,
**gekennzeichnet durch**
ein Fasermaterial als weiteren Bestandteil des Funktionswerkstoffs, das mit dem duroplastischen Material und/oder dem Bindematerial und/oder dem Additiv vermischt wird.

4. Verfahren nach einem der vorhergehenden Ansprüche,
**dadurch gekennzeichnet, dass**
das Brandverhalten zumindest einer Brandreaktionsklasse C gemäß DIN EN 13501-1 und zumindest einer Baustoffklasse B1 gemäß DIN 4102-1 entspricht.

5. Verfahren nach einem der vorhergehenden Ansprüche,
**dadurch gekennzeichnet, dass**
das Additiv mit dem duroplastischen Material und/oder dem Bindematerial vermischt wird.

6. Verfahren nach einem der vorhergehenden Ansprüche,
**dadurch gekennzeichnet, dass**
das Additiv einen Massenanteil von zumindest 3 % aufweist.

7. Verfahren nach einem der vorhergehenden Ansprüche,
**dadurch gekennzeichnet, dass**
das Additiv bei Temperaturbeaufschlagung ein Blähverhalten aufweist.

8. Verfahren nach Anspruch 7,
**dadurch gekennzeichnet, dass**
das Additiv eine Expansionsrate von zumindest 30 cm³/g aufweist.

9. Verfahren nach Anspruch 7 oder 8,
**dadurch gekennzeichnet, dass**
das Additiv eine Aktivierungstemperatur von zumindest 90 Grad Celsius aufweist.

10. Verfahren nach einem der vorhergehenden Ansprüche,
**dadurch gekennzeichnet, dass**
das Additiv einen Kohlenstoffgehalt aufweist.

11. Verfahren nach einem der vorhergehenden Ansprüche,
**dadurch gekennzeichnet, dass**
das Additiv auf Basis eines Graphits aufgebaut ist.

12. Verfahren nach einem der vorhergehenden Ansprüche,
**dadurch gekennzeichnet, dass**
das Additiv vor und/oder nach und/oder zugleich mit einer Einbringung des Bindematerials zugegeben wird.

13. Verfahren nach einem der vorhergehenden Ansprüche,
**dadurch gekennzeichnet, dass**
das duroplastische Material zerkleinerten Funktionswerkstoff aufweist.

14. Wärmedämmelement erhältlich nach einem Verfahren nach einem der Ansprüche 1 bis 13.

## Claims

1. Method for producing
a functional material
having a thermal conductivity according to EN (European Standard) 12667 of maximally 0.10 W/(m*K), a bulk density greater than 450 kg/m³, a compressive strength according to DIN EN (German/European Standard) 826 greater than 6 MPa, a flexural strength according to DIN EN 12089 greater than 4 MPa, a shear strength according to DIN EN 12090 greater than 1 MPa and a transverse strength according to DIN EN 12090 greater than 1 MPa,
from a thermoset material based on PUR hard foam and/or PIR hard foam, which is comminuted and then mixed with at least one binding material,
the binding material having, in a non-hardened state, a liquid consistency,
wherein, prior to an application of temperature and/or pressure to the thermoset material and the binding material, at least one additive is added which improves a burning behaviour,
the burning behaviour corresponding at least to a fire reaction class C according to DIN EN 13501-1.

2. Method according to claim 1,
**characterised in that** the thermoset material comprises comminuted PUR hard foam and/or PIR hard foam and comminuted phenol hard foam, which are bound by means of the binding material.

3. Method according to claim 1 or 2,
**characterised by** a fibre material constituting a further component of the functional material, which is mixed with the thermoset material and/or the binding material and/or the additive.

4. Method according to one of the preceding claims,
**characterised in that** the burning behaviour corresponds at least to a fire reaction class C according to DIN EN 13501-1 and at least to a construction material class B1 according to DIN 4102-1.

5. Method according to one of the preceding claims,
**characterised in that** the additive is mixed with the thermoset material and/or with the binding material.

6. Method according to one of the preceding claims,
**characterised in that** the additive constitutes a mass fraction of at least 3 %.

7. Method according to one of the preceding claims,
**characterised in that,** with a temperature applied, the additive presents an intumescent behaviour.

8. Method according to claim 7,
**characterised in that** the additive has an expansion rate of at least 30 cm³/g.

9. Method according to claim 7 or 8,
**characterised in that** the additive has an activation temperature of at least 90°C.

10. Method according to one of the preceding claims,
**characterised in that** the additive has a carbon content.

11. Method according to one of the preceding claims,
**characterised in that** the additive is composed on a graphite basis.

12. Method according to one of the preceding claims,
**characterised in that** the additive is added prior to and/or after and/or simultaneously with an introduction of the binding material.

13. Method according to one of the preceding claims,
**characterised in that** the thermoset material comprises comminuted functional material.

14. Heat insulation element resulting from a method according to one of claims 1 to 13.

## Revendications

1. Procédé pour produire
un matériau fonctionnel
ayant une conductivité thermique selon la norme européenne 12667 de maximalement 0,10 W/(m^{∗}K), une densité apparente supérieure à 450 kg/m³, une contrainte de compression selon DIN EN [norme allemande/européenne] 826 supérieure à 6 MPa, une contrainte de flexion se-Ion DIN EN 12089 supérieure à 4 MPa, une résistance à un cisaillement selon DIN EN 12090 supérieure à 1 MPa et une résistance à une poussée selon DIN EN 12090 supérieure à 1 MPa,
d'un matériau thermodurcissable basé sur une mousse PUR rigide et/ou PIR rigide, ledit matériau thermodurcissable étant broyé et alors mélangé avec au moins un matériau liant,
le matériau liant ayant, en état non-durci, une consistance liquide,
où, avant d'une application de température et/ou pression sur le matériau thermodurcissable et le matériau liant, au moins un additif est ajouté qui améliore un comportement au feu,
ledit comportement au feu correspondant au moins à une classe de résistance à feu C selon DIN EN 13501-1.

2. Procédé selon la revendication 1,
**caractérisé en ce que** le matériau thermodurcissable comporte de la mousse PUR rigide et/ou PIR rigide broyée et de la mousse phénol rigide broyée, qui sont liées par le matériau liant.

3. Procédé selon l'une quelconque des revendications 1 ou 2,
**caractérisé par** un matériau en fibre constituant un composant de plus du matériau fonctionnel, qui est mélangé avec le matériau thermodurcissable et/ou le matériau liant et/ou l'additif.

4. Procédé selon l'une quelconque des revendications précédentes,
**caractérisé en ce que** le comportement au feu corresponde au moins à une classe de résistance à feu C selon DIN EN 13501-1 et au moins à une classe de matériau à construction B1 selon DIN 4102-1.

5. Procédé selon l'une quelconque des revendications précédentes,
**caractérisé en ce que** l'additif est mélangé avec le matériau thermodurcissable et/ou le matériau liant.

6. Procédé selon l'une quelconque des revendications précédentes,
**caractérisé en ce que** l'additif présente une fraction massique d'au moins 3 %.

7. Procédé selon l'une quelconque des revendications précédentes,
**caractérisé en ce qu**', en application de température, l'additif présente un comportement de tumescence.

8. Procédé selon la revendication 7,
**caractérisé en ce que** l'additif présente un taux d'expansion d'au moins 30 cm³/g.

9. Procédé selon l'une quelconque des revendications 7 ou 8,
**caractérisé en ce que** l'additif présente une température d'activation d'au moins 90°C.

10. Procédé selon l'une quelconque des revendications précédentes,
**caractérisé en ce que** l'additif présente une teneur en carbone.

11. Procédé selon l'une quelconque des revendications précédentes,
**caractérisé en ce que** l'additif est composé sur la base d'un graphite.

12. Procédé selon l'une quelconque des revendications précédentes,
**caractérisé en ce que** l'additif est ajouté avant et/ou après et/ou simultanément avec un apport du matériau liant.

13. Procédé selon l'une quelconque des revendications précédentes,
**caractérisé en ce que** le matériau thermodurcissable comporte du matériau fonctionnel broyé.

14. Élément d'isolation thermique résultant d'un procédé selon l'une quelconque des revendications 1 à 13.
